# EUROPEAN PATENT APPLICATION

(11) **EP 4 600 715 A1**
(43) Date of publication of application: **13.08.2025**
(21) Application number: 25156659.2
(22) Date of filing: 07.02.2025
(51) Int. Cl.: G02B 27/01, G02C 11/00

(54) **ROD FOR DEVICE AND WEARABLE DEVICE COMPRISING SUCH A ROD**

(30) Priority: 09.02.2024 IT 202400002752
(71) Applicant: Luxottica S.r.l., 32021 Agordo (IT)
(72) Inventor: CANDIOTTO, Gianluca, 31030 Case Candiotto (TV) (IT); PONTILLO, Pietro, 32021 Agordo (BL) (IT); BILTON, Simon Lewis, Warwick, CV34 4AB (GB); BOZEAT, James David Spencer, Warwick, CV34 4AB (GB)
(74) Representative: Biallo, Dario

(57) **Abstract**

Rod (100) for device, comprising:
- a main portion (110) having an inner cavity defining a housing seat (120);
- at least one electronic component (130) adapted to be inserted into said housing seat (120) and adapted to be extracted from the housing seat (120);
- an extraction aid element (140) of said at least one electronic component (130), adapted to switch from a closing configuration, wherein said extraction aid element (140) is housed in the housing seat (120), to an opening configuration, wherein said extraction aid element (140) is at least partially extracted from said housing seat (120).

## Description

The present invention refers to a rod for device.

The present invention also relates to a smart wearable device comprising such a rod.

Wearable device means any type of device designed to be worn in front of at least one eye of the wearer and with a frame configured to be mounted on the head of the wearer.

For simplicity of explanation and treatment, reference will be made to smart glasses below.

As is known, smart glasses, also referred to as intelligent glasses, virtual glasses, or digital glasses, mean a pair of glasses comprising electronic devices adapted to operate as a computer, i.e., capable of providing support for the activities performed by the user wearing them, whether in daily and private settings or in work and corporate settings, or in any other specific context.

Such components allow, for example, to play video, audio, record, operate IT applications, recognize natural language, shapes and objects disposed in the surrounding environment.

Generally, known smart glasses provide that the electronic and/or electric components are integrated in the frame of the glasses.

The electronic and/or electric components are adapted to be electrically powered by a battery, in some cases removable, also integrated in the frame. The battery can be rechargeable.

Typically, it is necessary to replace the battery in order to extend the useful life of the glasses in which it is installed or to ensure the continuity of operation of the smart glasses in cases where there is no access to charging sources.

Removing the battery from the glasses also allows to facilitate the disposal and recycling of the battery itself. Indeed, the entire pair of smart glasses is not replaced and disposed, but only the battery.

Some known smart glasses comprise a seat formed, for example, in a rod of glasses, adapted to receive the battery so as to protect it from shocks and external agents such as water and dust.

Typically, in order to retain the battery in such a seat, it is known to use closing doors fixable to the rod by fixing means, for example, screws, or other connection means, for example, glue or adhesives. Replacing the battery is, therefore, cumbersome, as it requires the use of tools, for example, screwdrivers, or solvents or thermal energy, to remove the doors and extract the battery.

The object of the present invention is to overcome the above-mentioned drawbacks, and in particular to ideate a rod for device and a device comprising such a rod which allow an easy installation and extraction of a battery, in order to replace it.

These and other objects according to the present invention are achieved by making a rod for device and a device comprising such a rod as set forth in claim 1 and in claim 13, respectively.

Further features of the rod for device are the object of the dependent claims.

The features and advantages of a rod for device and a device comprising such a rod according to the present invention will be more apparent from the following exemplary and non-limiting description referred to the attached schematic drawings in which:

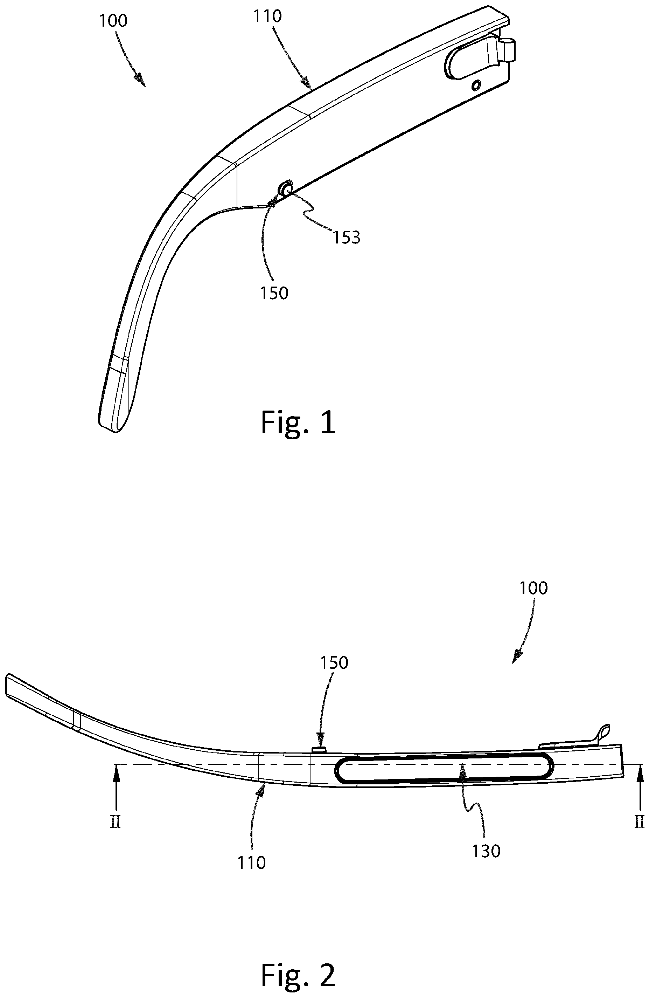

- Figure 1 is a perspective view of a rod for device according to the present invention, wherein the rod comprises a locking system;
- Figure 2 is a bottom view of the rod of Figure 1;
- Figure 3 is an exploded perspective view of a rod for device according to a first embodiment of the present invention;
- Figure 4 is a sectional view of the rod according to the first embodiment along the sectional line II-II of Figure 2;
- Figure 5a is a side view, partially transparent, of the rod of Figure 3, wherein an electronic component is inserted into the rod, and the locking system is made according to a preferred embodiment;
- Figure 5b is a side view, partially transparent, of the rod of Figure 5a, wherein the electronic component is extracted from the rod;
- Figure 6 is a sectional view along the sectional line VI-VI of the rod of Figure 5a;
- Figure 7 is a sectional view along the sectional line VII-VII of the rod of Figure 5a;
- Figure 8 is an exploded perspective view of a rod for device according to a second embodiment of the present invention;
- Figure 9 is a sectional view of the rod according to the second embodiment along the sectional line II-II of Figure 2;
- Figure 10a is a side view, partially transparent, of the rod of Figure 8, wherein the electronic component is inserted into the rod;
- Figure 10b is a side view, partially transparent, of the rod of Figure 10a, wherein the electronic component is extracted from the rod;
- Figure 11 is a sectional view along the sectional line XI-XI of the rod of Figure 10a;
- Figure 12 is a sectional view along the sectional line XII-XII of the rod of Figure 10a;
- Figure 13a is a perspective view of a particular embodiment of a device according to the present invention, comprising only one rod according to the present invention;
- Figure 13b is a first perspective view of the device of Figure 13a, comprising two rods according to the present invention, wherein the electronic component is extracted from both rods;
- Figure 13c is a perspective view of the device of Figure 13a, comprising two rods according to the present invention, wherein the electronic component is extracted from only one of such rods;
- Figure 13d is a second perspective view of the device of Figure 13b.

With reference to the figures, a rod for device, overall indicated by 100, is shown.

The rod 100 is associable with a front 310 of a device 300, such as, for example, a pair of smart glasses 300. The rod 100 can be rotatably coupled to such a front 310 or made as a single piece therewith.

The rod 100 comprises a main portion 110 having an inner cavity open towards the outside, defining a housing seat 120.

In particular, the housing seat 120 is defined by a bottom wall 121 and a perimeter wall 122.

The rod 100 comprises at least one electronic component 130 adapted to be inserted into the housing seat 120 and adapted to be extracted from the housing seat 120. Preferably, said electronic component 130 can be, for example, a rechargeable battery.

Preferably, as shown in the figures, the at least one electronic component 130 comprises a covering casing 131 in which the at least one electronic component 130 itself is housed.

The rod 100 comprises an extraction aid element 140 of the at least one electronic component 130, adapted to switch from a closing configuration, wherein the extraction aid element 140 is housed in the housing seat 120, to an opening configuration, wherein the extraction aid element 140 is at least partially extracted from the housing seat 120.

Furthermore, the extraction aid element 140 is also adapted to switch from the opening configuration to the closing configuration.

The extraction aid element 140 is configured to push the at least one electronic component 130 out of the housing seat 120 in the opening configuration.

When the extraction aid element 140 is in the closing configuration, the at least one electronic component 130 is completely inserted into the housing seat 120. When the extraction aid element 140 is in the opening configuration, the at least one electronic component 130 is at least partially outside the housing seat 120. Preferably, the extraction aid element 140 is substantially L-shaped and comprises a head 141 and a cantilevered portion 142 extending from the head 141. In an alternative embodiment not illustrated in the figures, the extraction aid element 140 is substantially C-shaped.

The cantilevered portion 142 is adapted to be interposed between the bottom wall 121 of the housing seat 120 and the at least one electronic component 130 in the closing configuration.

In particular, the cantilevered portion 142 can also be shaped to be in contact with the at least one electronic component 130 in the closing configuration. Preferably, the rod 100 comprises a locking system 150 engageable to the at least one electronic component 130 to maintain the at least one electronic component 130 in the housing seat 120 when the extraction aid element 140 is in the closing configuration.

The locking system 150 thus prevents the at least one electronic component 130 and the extraction aid element 140 from being unintentionally extracted from the housing seat 120.

Preferably, the locking system 150 comprises a constraint element 151 configured to engage to/disengage from said at least one electronic component 130.

Preferably, the locking system 150 is adapted to switch from a locking configuration, wherein the constraint element 151 is engaged with the at least one electronic component 130, to an unlocking configuration, wherein the constraint element 151 is disengaged from the at least one electronic component 130.

Preferably, the at least one electronic component 130 can have, as illustrated in the figures, a seat 134 adapted to receive the constraint element 151 in the locking configuration.

Preferably, the locking system 150 comprises a manual command element 153 facing towards the outside of the main portion 110, configured to engage/disengage the constraint element 151 to/from said at least one electronic component 130.

The manual command element 153 can be moved by a user to allow the locking system 150 to switch from the locking configuration to the unlocking configuration, and vice versa.

For example, the manual command element 153 can be a button that can be pressed by a user such that the constraint element 151 disengages from the at least one electronic component 130, to switch the locking system from the locking configuration to the unlocking configuration.

In this case, the manual command element 153 is at least partially protruding from the main portion 110.

Furthermore, for example, the manual command element 153 can be a fixing element, such as a screw or a rivet, or a known pressure element. In this case, the manual command element 153 is completely inserted into the main body 110

Preferably, as shown in the figures, the manual command element 153 can be a linear slider adapted to slide in a slotted guide 154 formed on the main portion 110, such that the locking system 150 switches from the locking configuration to the unlocking configuration and vice versa.

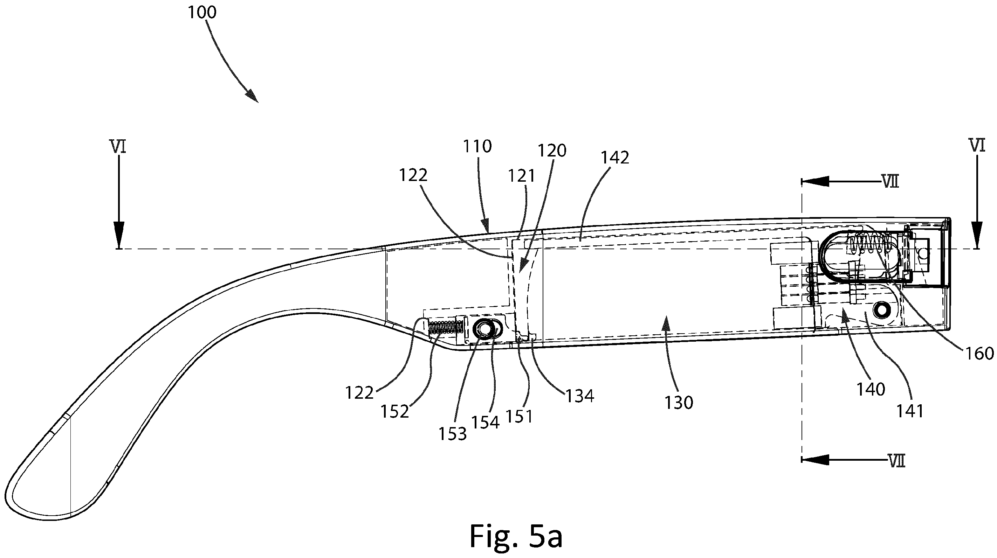

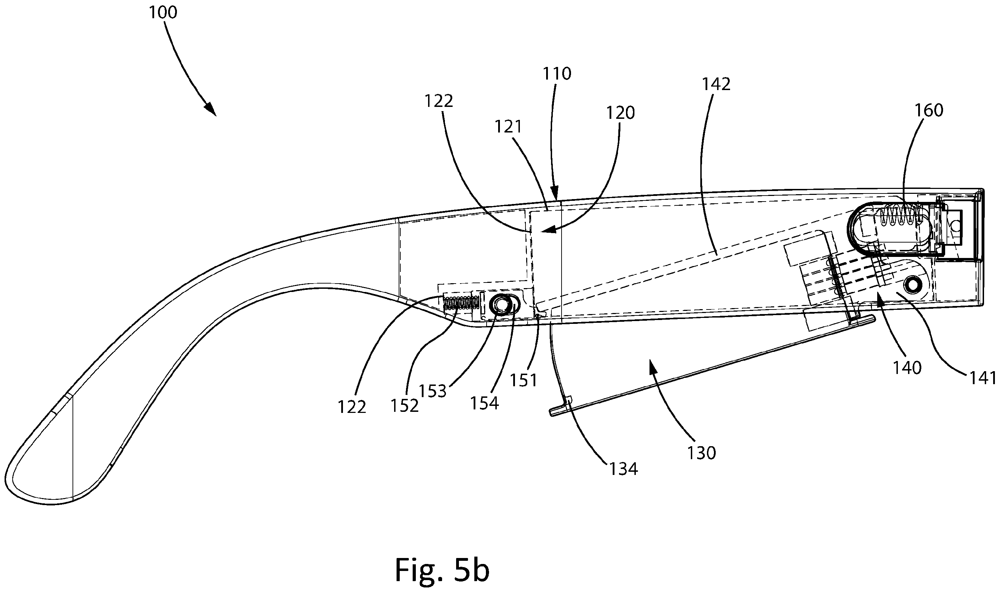

Still more preferably, in a preferred embodiment of the locking system 150, as shown in Figure 5a, the locking system 150 also comprises a first elastic element 152 connected to the housing seat 120 on one side and to the part opposite to the constraint element 151 on the other side.

In this case, the first elastic element 152 is connected to the perimeter wall 122.

The first elastic element 152 is arranged to push the constraint element 151 such that the latter engages with the at least one electronic component 130. Preferably, the first elastic element 152 is preloaded in compression with a first preloading force. In this case, the first elastic element 152 maintains the constraint element 151 pushed against the at least one electronic component 130 when the locking system 150 is in the locking configuration.

In the preferred embodiment of the locking system 150, the manual command element 153 is configured to compress the first elastic element 152 so as to disengage the constraint element 151 from the at least one electronic component 130.

In the preferred embodiment of the locking system 150, during the switching of the locking system 150 from the locking configuration to the unlocking configuration, the manual command element 153 is forced to slide in the slotted guide 154, so as to load in compression the first elastic element 152 with a compression force greater than the first preloading force. In this way, the constraint element 151 disengages from the at least one electronic component 130 due to the sliding of the manual command element 153.

Still in the preferred embodiment of the locking system 150, the locking system 150 can switch from the unlocking configuration to the locking configuration by releasing the manual command element 153. By doing so, the first elastic element 152 extends due to the loaded compression force and pushes the constraint element 151 to engage with the at least one electronic component 130.

When the locking system 150 is in the unlocking configuration, the extraction aid element 140 can switch from the closing configuration to the opening configuration and vice versa.

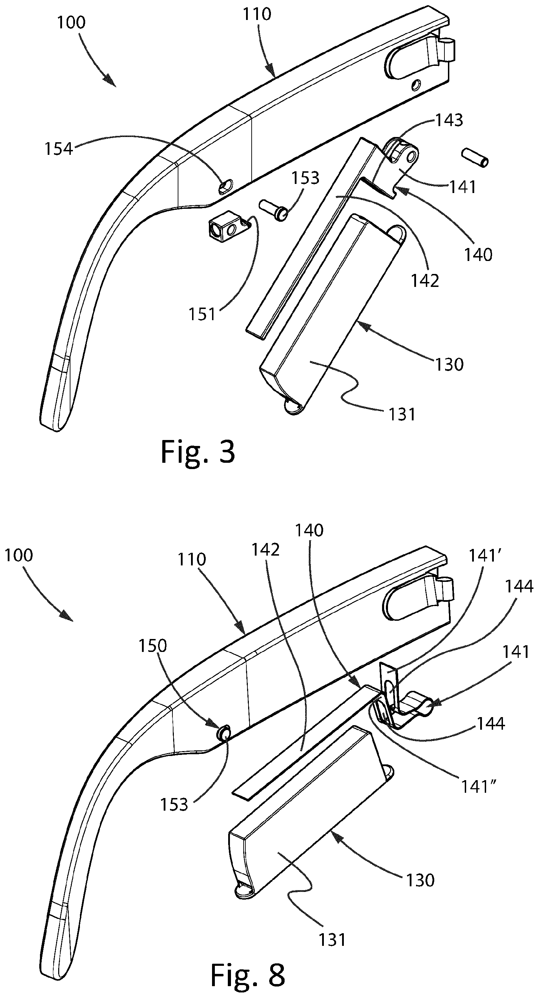

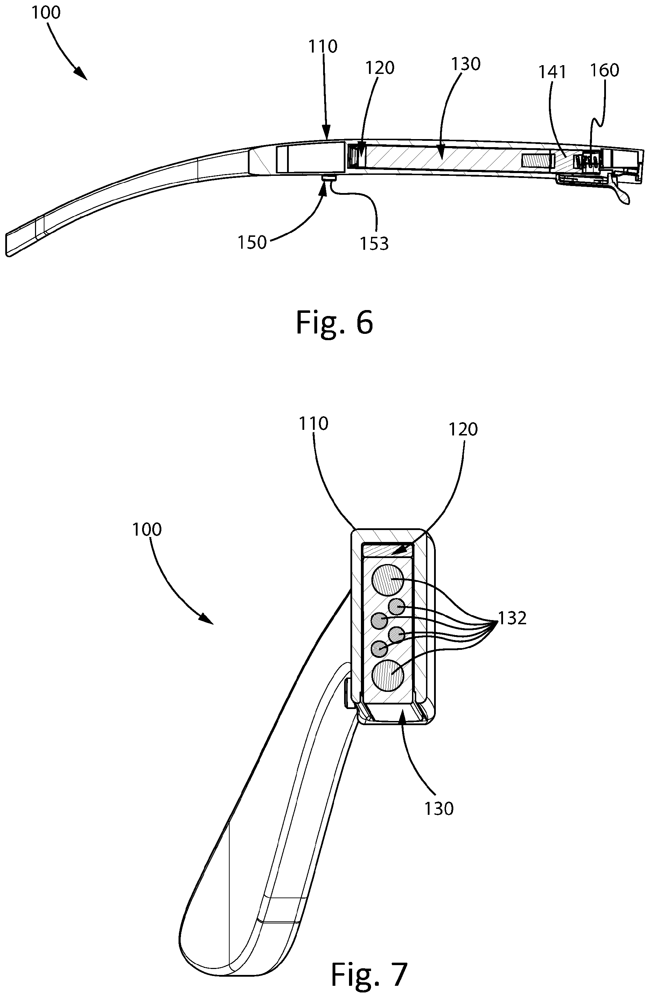

In a first embodiment of the rod 100, shown in Figures 3-7, the head 141 is rotatably coupled around a hinging axis to the main portion 110 inside the inner cavity. Preferably, still in the first embodiment, and in the case where the rod 100 comprises the locking system 150, the rod 100 comprises a second elastic element 160 arranged to exert a first thrust force on the at least one electronic component 130.

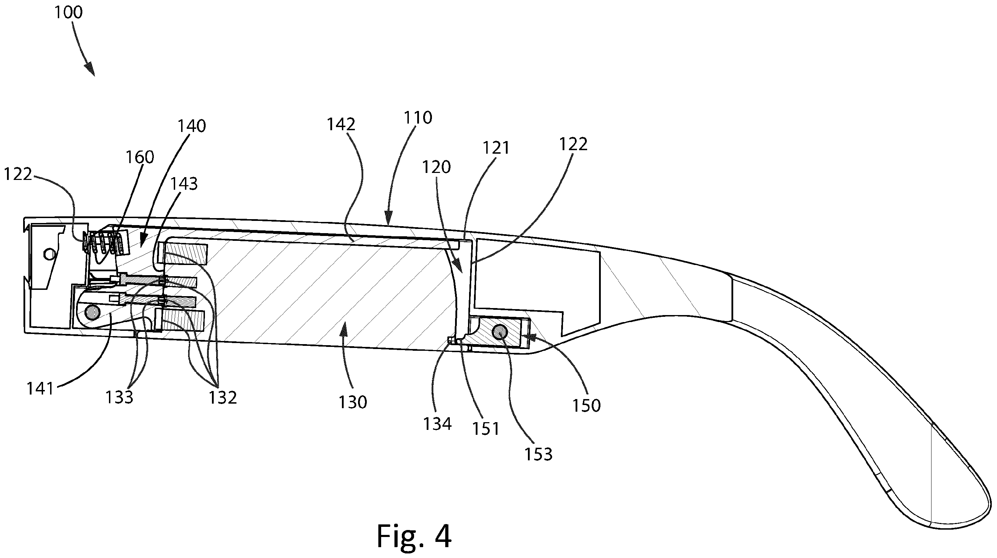

In more detail, as shown in Figure 4, the second elastic element 160 is connected to the housing seat 120 on one side and is configured to be in contact with the extraction aid element 140 on the other side. Preferably, the second elastic element 160 is housed in the housing seat 120 on the side opposite to the locking system 150.

In particular, the second elastic element 160 is connected on one side to the perimeter wall 122 and on the other side to the head 141.

The second elastic element 160 is configured to push the head 141 such that the extraction aid element 140 is forced to switch from the closing configuration to the opening configuration when the locking system 150 is in the unlocking configuration.

Preferably, the second elastic element 160 is preloaded in compression with a second preloading force. Preferably, when the extraction aid element 140 is in the closing configuration, the second elastic element 160 pushes against the head 141 with the second preloading force. In this case, if the locking system 150 is in the locking configuration, the extraction aid element 140 cannot switch to the opening configuration. Preferably, when the extraction aid element 140 is in the closing configuration and the locking system 150 is switched from the locking configuration to the unlocking configuration, the second elastic element 160 extends and pushes the head 141 due to the first thrust force, which is equal to the second preloading force. In this case, the cantilevered portion 142 draws in rotation the at least one electronic component 130, which is thereby guided to be extracted from the housing seat 120.

Thus, the first thrust force facilitates the extraction of the at least one electronic component 130 during the switching of the extraction aid element 140 from the closing configuration to the opening configuration.

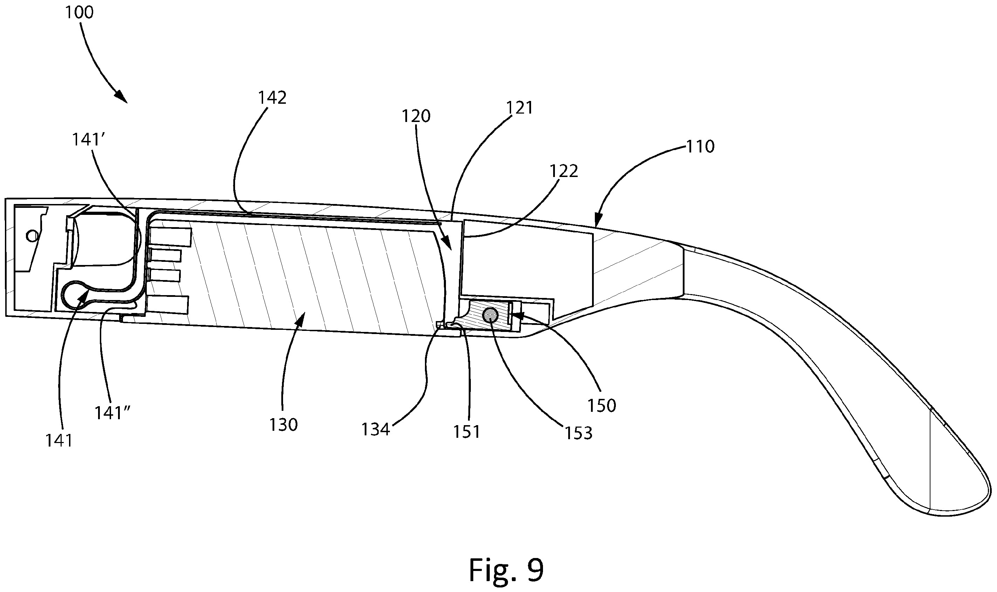

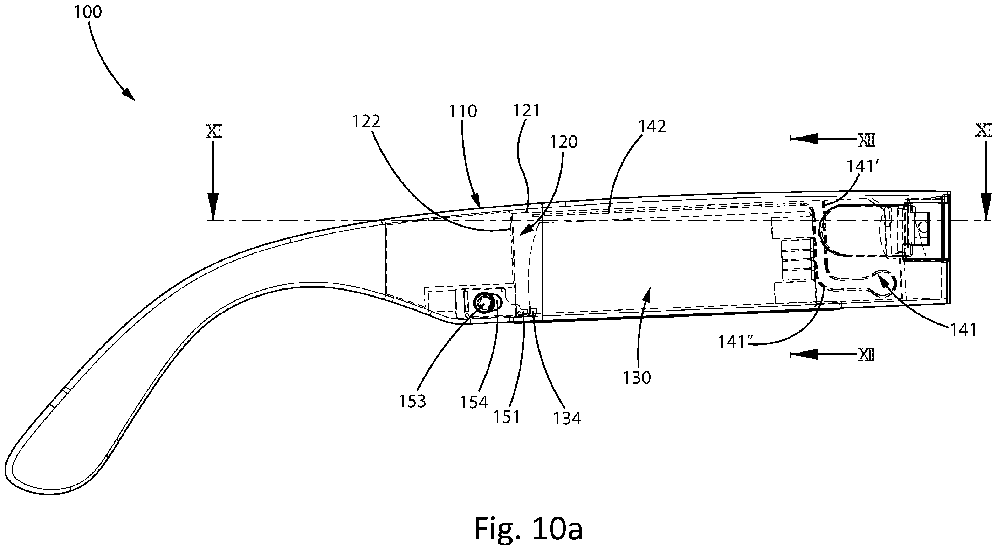

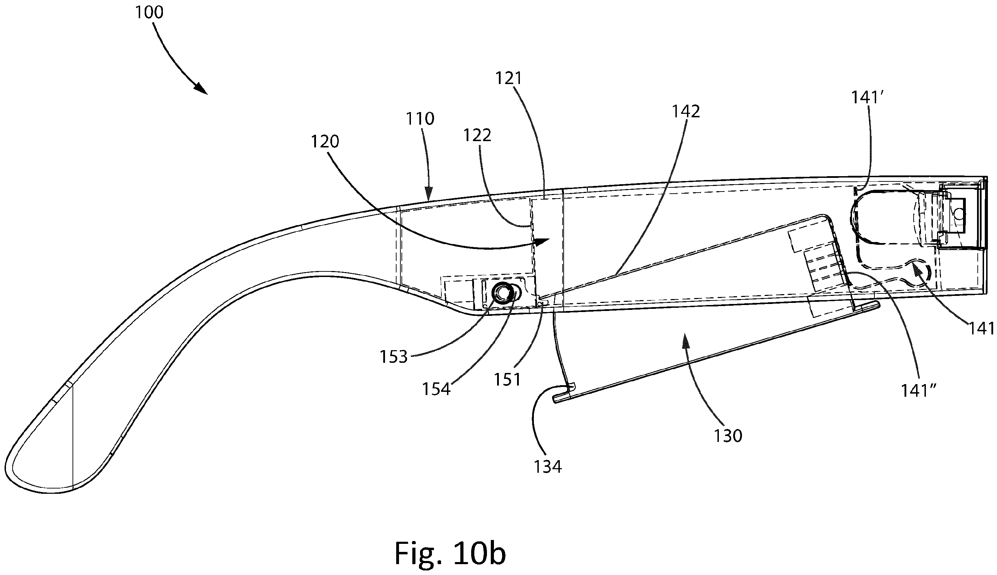

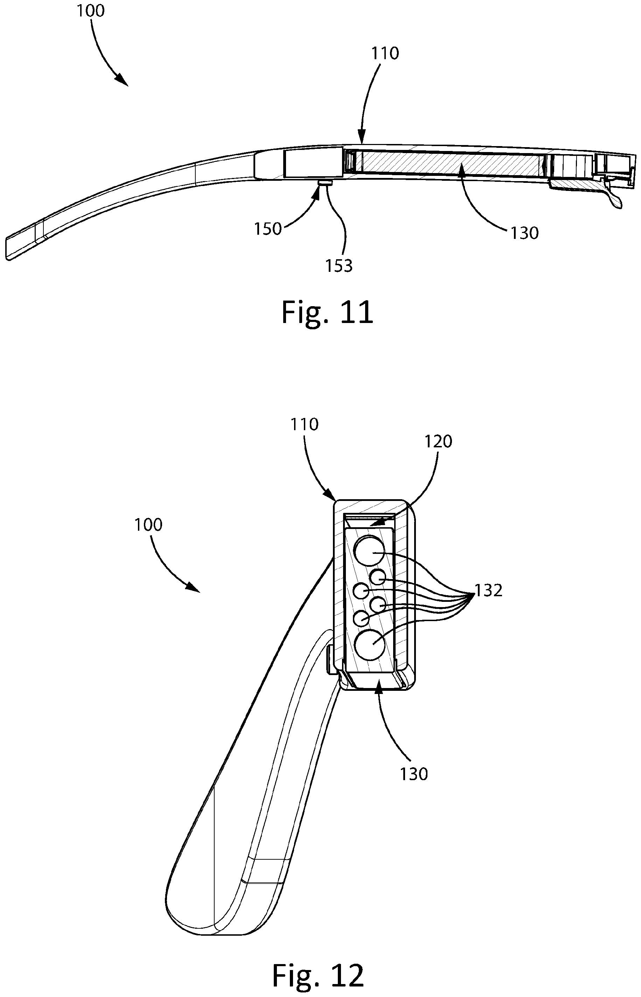

In a second embodiment of the rod 100, shown in Figures 8-12, the head 141 is configured to at least partially elastically deform so as to exert a second thrust force on the at least one electronic component 130.

In this case, preferably, the head 141 has a first portion 141' and a second portion 141'' connected to each other.

The first portion 141' is constrained to the main body 110, preferably inside the inner cavity of the housing seat 120.

The second portion 141" is connected to the cantilevered portion 142.

The first portion 141' and the second portion 141" substantially make an elastic element, in particular two ends of an elastic element; they can assume a close position, wherein said elastic element is loaded with an elastic force, and a spaced position.

In detail, the loading elastic force of said elastic element tends to move the second portion 141'' away from the first portion 141', causing them to switch from the close position to the spaced position.

When the extraction aid element 140 is in the closing configuration, the first portion 141' and the second portion 141'' are in the close position and exert the second thrust force on the at least one electronic component 130.

When the extraction guide element 140 is in the opening configuration, the first portion 141' and the second portion 141'' are in the spaced position.

Preferably, when the extraction aid element 140 is in the closing configuration, and the locking system 150 is switched from the locking configuration to the unlocking configuration, the second portion 141'' moves away from the first portion 141' and pushes the at least one electronic component 130 with the second thrust force. Furthermore, the cantilevered portion 142, which is connected to the second portion 141", draws in rotation the at least one electronic component 130, which is thereby guided to be extracted from the housing seat 120.

The second thrust force thus facilitates the extraction of the at least one electronic component 130 during the switching of the extraction aid element 140 from the closing configuration to the opening configuration. Preferably, the at least one electronic component 130 comprises first electric contacts 132 configured to face second electric contacts 133 when the at least one electronic component 130 is inserted into the housing seat 120, and the extraction aid element 140 is in the closing configuration.

In the first embodiment, the second electric contacts 133 are associated with the extraction aid element 140. More specifically, preferably as shown in Figure 4, the second electric contacts 133 are disposed on a wall 143 of the head 141 facing towards the at least one electronic component 130 when the at least one electronic component 130 is inserted into the housing seat 120.

In the second embodiment, the second electric contacts 133 are associated with the housing seat 120. In this case, the first portion 141' and the second portion 141" have respective holes 144, configured to be disposed in correspondence with each other when the at least one electronic component 130 is inserted into the housing seat 120. The first electric contacts 132 reach the second electric contacts 133 through the holes 144. Advantageously, the rod 100 can be mounted on the device 300 or made as a single piece therewith.

The device 300 comprises the front 310 and at least one rod 100 associated with the front 310.

Preferably, the device 300 is wearable.

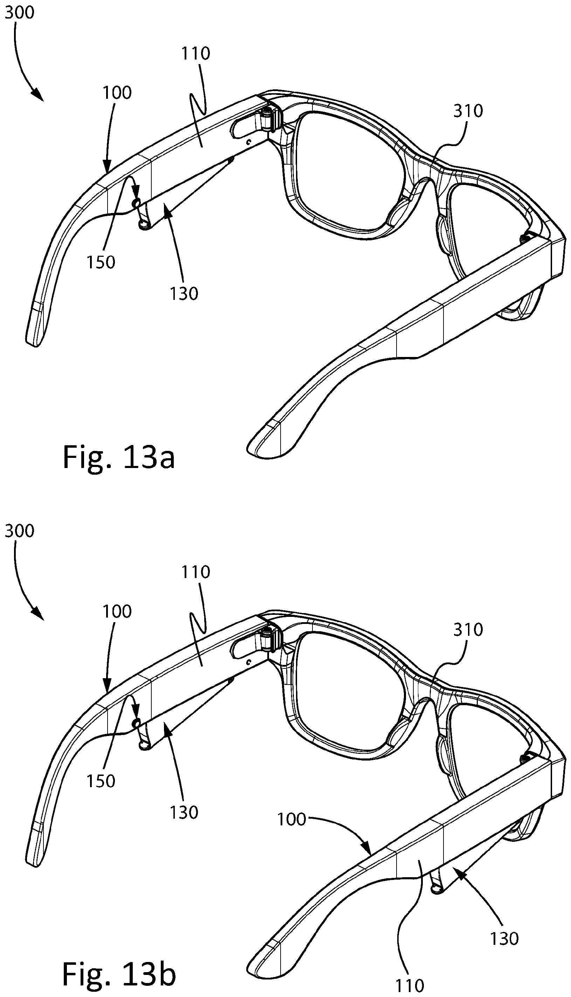

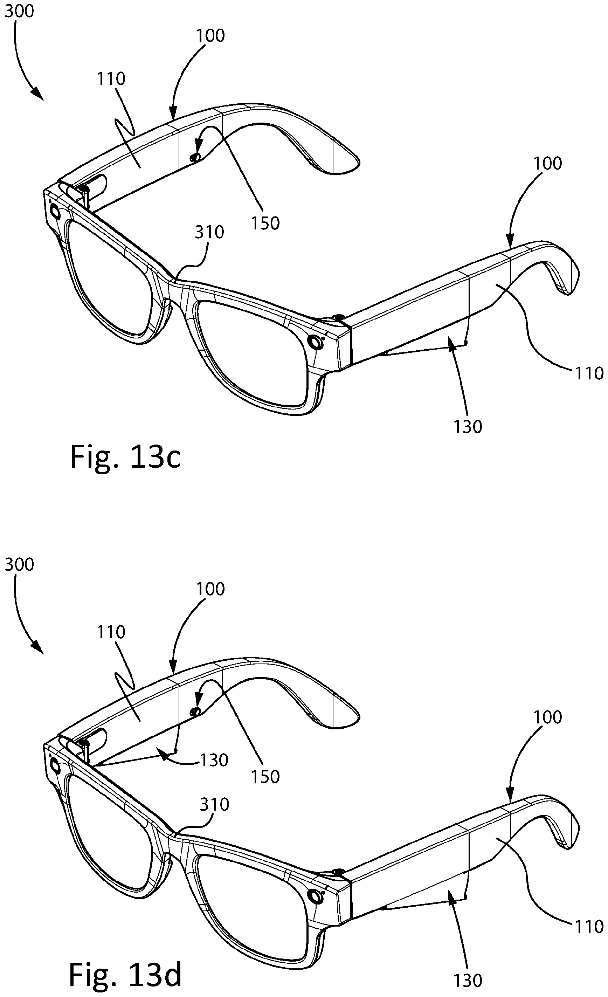

In a specific embodiment, shown in Figures 13a, 13b, 13c, and 13d, the device 300 is a pair of smart glasses 300, comprising the front 310 adapted to carry at least one lens and two rods associated with the front 310. Preferably, as shown in Figure 13a, only one rod of the smart glasses 300 is a rod 100 in accordance with the present invention.

Preferably, as shown in Figures 13b, 13c, and 13d, both rods of the smart glasses 300 are two rods 100 in accordance with the present invention.

From the description provided, the features of the rod for device and a device comprising such a rod, which are the object of the present invention, are clear, as are the related advantages.

The extraction aid element facilitates the extraction and installation of the at least one electronic component in the rod.

Finally, it is clear that the rod for device and the device thus conceived are susceptible of numerous modifications and variants, all falling within the invention; furthermore, all details are replaceable by technically equivalent elements. In practice, the materials used, as well as the dimensions, can be any depending on the technical requirements.

## Claims

1. Rod (100) for device comprising:
- a main portion (110) having an inner cavity defining a housing seat (120);
- at least one electronic component (130) adapted to be inserted into said housing seat (120) and adapted to be extracted from the housing seat (120);
- an extraction aid element (140) of said at least one electronic component (130) adapted to switch from a closing configuration, wherein said extraction aid element (140) is housed in the housing seat (120), to an opening configuration, wherein said extraction aid element (140) is at least partially extracted from said housing seat (120).

2. Rod (100) according to claim 2, wherein said extraction aid element (140) is adapted to switch from said opening configuration to said closing configuration.

3. Rod (100) according to claim 1 or 2, wherein said at least one electronic component (130) is a rechargeable battery.

4. Rod (100) according to any one of the preceding claims, wherein said extraction aid element (140) is configured to push the at least one electronic component (130) out of the housing seat (120) in the opening configuration.

5. Rod (100) according to any one of the preceding claims, wherein said extraction aid element (140) is substantially L-shaped and comprises a head (141) and a cantilevered portion (142) extending from said head (141); said cantilevered portion (142) being adapted to be interposed between a bottom wall (121) of the housing seat (120) and the at least one electronic component (130) in the closing configuration.

6. Rod (100) according to any one of the preceding claims, comprising a locking system (150) engageable to the at least one electronic component (130) to maintain said at least one electronic component (130) in said housing seat (120) when the extraction aid element (140) is in the closing configuration.

7. Rod (100) according to claim 6, wherein said locking system (150) comprises:
- a constraint element (151) configured to engage to/disengage from said at least one electronic component (130);
- a manual command element (153) facing towards the outside of said main portion (110) configured to engage/disengage said constraint element (151) to/from said at least one electronic component (130).

8. Rod (100) according to claim 7, wherein the locking system (150) comprises a first elastic element (152) connected to the housing seat (120) on one side and to the part opposite to the constraint element (151) on the other side, said first elastic element (152) being arranged to push the constraint element (151) such that the latter engages with the at least one electronic component (130).

9. Rod (100) according to any one of the claims from 6 to 8 comprising a second elastic element (160) arranged to exert a first thrust force on said at least one electronic component (130).

10. Rod (100) according to any one of claims from 5 to **9,** wherein said head (141) is rotatably coupled around a hinging axis to the main portion (110) inside the inner cavity.

11. Rod (100) according to any one of the preceding claims, wherein the at least one electronic component (130) comprises first electric contacts (132) configured to face second electric contacts (133) when said at least one electronic component (130) is inserted into the housing seat (120) and said extraction aid element (140) is in the closing configuration, said second electric contacts (133) being associated to the extraction aid element (140).

12. Rod (100) according to any one of claims from 5 to 8, wherein the head (141) is configured to at least partially elastically deform so as to exert a second thrust force on said at least one electronic component (130).

13. Device (300) comprising:
- a front (310),
- at least one rod (100) associated to said front (310), said rod (100) comprising:
- a main portion (110) having an inner cavity defining a housing seat (120);
- at least one electronic component (130) adapted to be inserted into said housing seat (120) and adapted to be extracted from the housing seat (120);
- an extraction aid element (140) of said at least one electronic component (130) adapted to switch from a closing configuration, wherein said extraction aid element (140) is housed in the housing seat (120), to an opening configuration, wherein said extraction aid element (140) is at least partially extracted from said housing seat (120).

14. Device (300) according to claim 13, wherein said device (300) is wearable.
